# EUROPEAN PATENT APPLICATION

(11) **EP 4 804 292 A1**
(43) Date of publication of application: **09.09.2026**
(21) Application number: 25161955.7
(22) Date of filing: 05.03.2025
(51) Int. Cl.: H01M 10/613, H01M 10/653, H01M 10/6557, H01M 10/6567, H01M 10/65, H01M 10/633, H01M 10/647

(54) **BATTERY MODULE WITH PLASTIC COOLING PLATES**

(71) Applicant: Samsung SDI Co., Ltd., Yongin-si, Gyeonggi-do 17084 (KR)
(72) Inventor: Erhart, Michael, 8054 Seiersberg-Pirka (AT); Prossnigg, Florian, 8047 Graz (AT); Hochgatterer, Nikolaus, 8041 Graz (AT)
(74) Representative: Gulde & Partner

(57) **Abstract**

The present disclosure refers to a battery module with a cooling system including plastic cooling plates. This allows for an efficient cooling and extinguishing in case of a thermal run-away. Further, the present disclosure relates to a vehicle, in which at least one battery module with a cooling system including plastic cooling plates is employed. Moreover, the present disclosure is related to a method for controlling a battery module with a cooling system including plastic cooling plates.

## Description

### Field of the Disclosure

The present disclosure relates to a battery module with a cooling system including plastic cooling plates. Further, the present disclosure relates to a vehicle, in which at least one battery module with a cooling system including plastic cooling plates is employed. Moreover, the present disclosure is related to a method for controlling a battery module with a cooling system including plastic cooling plates.

### Technological Background

A battery system may include a battery management system (BMS), which is an electronic system that is configured to manage a rechargeable battery cell, battery module, and battery pack, such as by protecting the battery cells from operating outside their safe operating area, monitoring their states, calculating secondary data, reporting that data, controlling an environment, authenticating it and/or balancing it. For example, the BMS may monitor the state of the battery cell as represented by voltage (e. g., a total voltage of the battery pack or battery modules, or voltages of individual battery cells), temperature (e.g., an average temperature of the battery pack or battery modules, coolant intake temperature, coolant output temperature, or temperatures of individual battery cells), coolant flow (e.g., flow rate, and/or cooling liquid pressure), and current. Additionally, the BMS may calculate values based on the above parameters, such as minimum and maximum cell voltage, state of charge (SoC) or depth of discharge (DoD) to indicate the charge level of the battery cell, state of health (SoH; a variously-defined measurement of the remaining capacity of the battery cell as % of the original capacity), state of power (SoP; the amount of power available for a defined time interval given the current power usage, temperature and other conditions), state of safety (SoS), maximum charge current as a charge current limit (CCL), maximum discharge current as a discharge current limit (DCL), and internal impedance of a cell (to determine open circuit voltage).

The BMS may be centralized such that a single controller is connected to the battery cells through a plurality of wires. In other examples, the BMS may be also distributed, with a BMS board is installed at each cell, and only a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by an over-current, over-voltage (e.g., during charging), over-temperature, under-temperature, over-pressure, and ground fault or leakage current detection. The BMS may prevent the battery from operating outside its safe operating parameter by including an internal switch (e. g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/ dissipating heat from the cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions restored, the BMS may shut down necessary battery cells to protect the entire system.

State of the art is a bottom cooling of battery cells. For example, in conventional designs for a battery module, a bottom side of the battery cells is used for cooling the battery cell. To prevent thermal propagation in such battery modules, cell spacers are used to increase the distance between adjacent battery cells. The cell spacers typically have a thickness of 3 to 4 mm.

However, a usage of such cell spacers having a thickness of 3 to 4 mm decreases the energy density of the battery module up to approximately 10 % in comparison to the energy that would theoretically be achievable in a battery module without cell spacers.

Hence, there is a need for an alternative design of a battery module that allows for an increase of the battery module's energy density in comparison to the above-sketched conventional design of a battery module. Also, it is desirable that the manufacture costs of the novel design are lower than those arising with the conventional design. Also, there is a need for a method for controlling a battery module according to a design that allows for an increase of the battery module's energy density in comparison to the above-sketched conventional design of a battery module.

It is thus an object of the present disclosure to provide a design of battery module that allows for an increase of the battery module's energy density in comparison to a conventional design of a battery module, and which, at the same time, also allows for a decrease of the manufacture costs in comparison to those arising with the conventional design. It is a further object of the present disclosure to provide a method for controlling a battery module according to a design that allows for an increase of the battery module's energy density in comparison to the above-sketched conventional design of a battery module.

### Summary of Invention

The invention is defined by the appended claims. The description that follows is subjected to this limitation. Any disclosure lying outside the scope of the claims is only intended for illustrative as well as comparative purposes.

According to a first aspect of the present disclosure, a battery module is provided, the battery module including: a battery cell stack, the battery cell stack including a plurality of battery cells being stacked along a first direction; a plastic cooling plate configured for guiding a coolant; a pump; and a control means; wherein each of the plurality of battery cells is in thermal contact with the plastic cooling plate; wherein the plastic cooling plate is made of or includes a plastics material configured for melting when the plastics material comes into thermal contact with a battery cell affected by a thermal run-away; wherein the control means is configured for detecting a situation, wherein at least one of the plurality of battery cells is affected by a thermal run-away; and wherein the control means is further configured for controlling, upon or after detection of a thermal run-away in at least one of the plurality of battery cells, the pump such that, for a battery cell affected by the thermal run-away, the coolant is guided through the plastic cooling plate being in thermal contact with the battery cell or, for the plastic cooling plate being in thermal contact with the battery cell, a flow rate of the coolant guided through the plastic cooling plate is increased in comparison to the flow rate before the detection of the thermal run-away.

A second aspect of the present disclosure relates to a battery system including one or more battery modules according to the first aspect or any one of its afore-described embodiments.

A third aspect of the present disclosure relates to a vehicle including at least one battery module according to the first aspect and/or a battery system according to the second aspect.

A fourth aspect of the present disclosure relates to a method for controlling a battery module according to the first aspect of any one of its embodiments. The method includes the following steps:
a) detecting, by the control means, whether at least one of the plurality of battery cells is affected by a thermal run-away;
b) upon or after detection of a thermal run-away in step a), controlling the pump such that, for a battery cell affected by the thermal run-away, the coolant is guided through the plastic cooling plate being in thermal contact with the battery cell or, for the plastic cooling plate being in thermal contact with the battery cell, a flow rate of the coolant guided through the plastic cooling plate is increased in comparison to the flow rate before the detection of the thermal run-away in step a).

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a conventional battery cell.
- Fig. 2: illustrates a schematic top view of a first embodiment of a battery module according to the disclosure.
- Fig. 3: illustrates a schematic top view of a second embodiment of a battery module according to the disclosure.
- Fig. 4: provides a schematic cut through an example of a plastic cooling plate that can be used with embodiments of a battery module according to the disclosure.
- Fig. 5: is a schematic cut through a further example of a plastic cooling plate that can be used with embodiments of a battery module according to the disclosure.
- Fig. 6: illustrates a schematic top view of a third embodiment of a battery module according to the disclosure.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e. g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to a first aspect of the present disclosure, a battery module is provided, the battery module including: a battery cell stack, the battery cell stack including a plurality of battery cells being stacked along a first direction; a plastic cooling plate configured for guiding a coolant; a pump; and a control means; wherein each of the plurality of battery cells is in thermal contact with the plastic cooling plate; wherein the plastic cooling plate is made of or includes a plastics material configured for melting when the plastics material comes into thermal contact with a battery cell affected by a thermal run-away; wherein the control means is configured for detecting a situation, wherein at least one of the plurality of battery cells is affected by a thermal run-away; and wherein the control means is further configured for controlling, upon or after detection of a thermal run-away in at least one of the plurality of battery cells, the pump such that, for a battery cells affected by the thermal run-away, the coolant is guided through the plastic cooling plates being in thermal contact with the battery cell or, for the plastic cooling plate being in thermal contact with the battery cell, a flow rate of the coolant guided through the plastic cooling plate is increased in comparison to the flow rate before the detection of the thermal run-away.

In one embodiment, the battery module the control means is further configured for controlling the pump such that, upon or after detection of a thermal run-away in at least one of the plurality of battery cells, the flow of coolant guided through the plastic cooling plate is stopped for a predetermined time interval or a flow rate of the coolant guided through the plastic cooling plate is decreased for a predetermined time interval.

In one embodiment, each of the plurality of battery cells has a prismatic shape. If the number of battery cell stacks is larger than one, the battery cell stacks may be arranged in parallel to each other along a first direction. The plastic cooling plate may extend perpendicular to the first direction. Each of the battery cell stacks may be crossed or intersected by the plastic cooling plate.

In one embodiment, each of the battery cells comprises main sides, and at least one of the main sides abuts with the plastic cooling plate.

In one embodiment, each of the battery cells is sandwiched between two plastic cooling plates.

In one embodiment, the battery cells stack comprises an even number of N battery cells being grouped into N / 2 pairs of adjacent battery cells, and each of the N / 2 pairs of adjacent battery cells is sandwiched between two plastic cooling plates.

In one embodiment, the plastic cooling plates comprises a hollow main body assembled of two half-plates made of a first material comprising plastics.

In one embodiment of the battery module, for the hollow main body, the two half-plates each comprise a peripheral edge area and are sealed together by their peripheral edge areas.

In one embodiment of the battery module, for the hollow main body, at least one of the two half-plates comprises a structure adapted for guiding the coolant and transferring compressive forces between the two half-plates.

In one embodiment, the hollow main body comprises an inlay being overmolded by the first material of the two half-plates. The inlay may comprise a second material different from the first material.

In one embodiment, the second material comprises a higher thermal conductivity than first material; and/or the second material has a higher heat resistance than the first material.

According to a second aspect, a battery module includes: at least one battery cell stack, each of the battery cell stacks including a plurality of battery cells being stacked along a first direction; at least one plastic cooling plate configured for guiding a coolant; at least one pump; a control means; wherein each of the battery cells is in thermal contact with at least one of the plastic cooling plates; wherein the at least one plastic cooling plate is made of or at least includes a plastics material configured for melting when the plastics material comes into thermal contact with a battery cell affected by a thermal run-away; wherein the control means is configured for detecting a situation, wherein at least one of the battery cells is affected by a thermal run-away; and wherein the control means is further configured for controlling, upon or after detection of a thermal run-away in at least one of the battery cells, the at least one pump such that, for each of the battery cells affected by the thermal run-away, coolant is guided at least through one of the plastic cooling plates being in thermal contact with the battery cell or, for at least one plastic cooling plate being in thermal contact with the battery cell, a flow rate of the coolant guided through the plastic cooling plate is increased in comparison to the flow rate before the detection of the thermal run-away.

Compared to the conventional design of a battery module as described above in the introductory part of the disclosure, the design of a battery module according to the afore-described first or second aspect of the disclosure produces less costs and higher cooler integration flexibility.

The afore-described battery module according to the or second aspect of the disclosure provides, i. a., the following further advantage: In case of a thermal run-away of one or more of the battery cells, the plastic cooler plates adjacent to the battery cells affected by the thermal run-away become heated by the heat generated within these battery cells due to the thermal run-away (see the explanations above as to the heat generation in case of a thermal run-away). Since at least one plastic cooling plate is made of or at least includes a plastics material configured for melting when the plastics material comes into thermal contact with a battery cell affected by a thermal run-away, the corresponding plastic cooling plates melt through due to the heat transferred from adjacent battery cells undergoing a thermal run-away. In other words, the wall of the plastic cooler plates dissolves or disintegrates in regions adjacent to the failed battery cells. Hence, after this process, coolant guided through the plastic cooling plates come into direct contact with the battery cells affected by a thermal run-away and has thus (i) an optimal cooling effect on the affected battery cells and (ii) extinguishes the thermal run-away occurring in the failed battery cells.

When the coolant comes into direct contact with an affected battery cell, the coolant escaping from the plastic cooling plates through the melted areas (see above) may also enter into the interior of the battery cell, e. g., by entering through the battery cell's venting opening or through openings in the battery cell's case that have been evolved due to melting processes of the battery cell caused by the thermal run-away. In such cases, the interior of the affected battery cells may be flooded with coolant.

A further advantage of using a plastics material for some or all of the cooling plates is the reduction of manufacture costs in comparison to conventional cooling plates, which are typically made of metal.

In embodiments, each of the plastic cooling plates is made of or at least includes a plastics material configured for melting when the plastics material comes into thermal contact with a battery cell affected by a thermal run-away.

In embodiments, at least one of the plastic cooling plates is made of a plastics material having a melting temperature in or below the temperature range of a thermal run-away. For example, the melting temperature of the plastics material may be in a temperature range of 150 °C to 300 °C. For example, the melting temperature of the plastics material is 200°C.

Locally, a battery cell undergoing a thermal runaway can reach temperatures up to 1400° C. This leads to immediate melting of the housings (e. g., aluminum housings having a melting temperature of approximately 660° C) of the affected battery cells in the corresponding areas as well as to immediate melting of the plastics material (e. g., having a melting temperature of around 200° C, see above) of plastic cooling plates arranged adjacent to these areas.

In the embodiment, some or all of the plastic cooling plates may be in direct contact with one or more surfaces of the battery cells, i. e., no additional layers or coatings are arranged between the plastic cooling plates and the battery cells. This way, the heat exchange between the plastic cooling plates and the battery cells is further improved.

In embodiments, some or all of the plastic cooling plates may be glued to the respective adjacent main sides of the battery cells to improve the mechanical stability of the battery module. In embodiments, gap fillers may be inserted between the main sides of the battery cells and the adjacent plastic cooling plates. In such embodiments, the gap fillers may also be used for gluing the main sides of the battery cells to the adjacent plastic cooling plates.

In embodiments, wherein intermediate layers (such as adhesive layers) are provided between the plastic cooling plates and the battery cells, the intermediate layers may be configured such that the intermediate layers melts when coming into thermal contact with a battery cell affected by a thermal run-away.

The expression "plastic cooling plate" as used above in the description of the battery module according the disclosure and will also be used below, could be replaced simply by "cooling plate." However, to make the term more intelligibly, the term "plastic cooling plate" has been chosen.

The expression "coolant" refers to a cooling liquid such as water.

In embodiments, electrically non-conducting coolants may be used to prevent short circuits, if coolant enters or comes into contact with the failed battery cells after the plastic cooling plates having melted in regions adjacent to the failed battery cells (see above). However, those short circuits do not lead to a major problem. Hence, in embodiments, conductive coolants such as water may be employed. The use of conductive coolants such as water has the advantage that those coolants are typically less expensive in comparison to electrically non-conducting coolants.

In embodiments, the battery module includes temperature sensors for detecting an occurrence of a thermal run-away in the one or more battery cells. The temperature sensors may be attached to the battery cells. In embodiments, there may be provided one temperature sensors per battery cell. In embodiments, the battery cells may be grouped into groups of multiple battery cells (e. g., pairs each including two battery cells), and there may then be provided one temperature sensor per group.

In embodiments, the battery module includes pressure sensors for detecting an occurrence of a thermal run-away in the one or more battery cells. Each of the pressure sensors may be arranged within the interior of a battery cell housing. In embodiments, each battery cell may be equipped with a pressure sensor.

In embodiments, the battery module includes voltage sensors and/or current sensors for detecting an occurrence of a thermal run-away in the one or more battery cells. In embodiments, each battery cell may be equipped with a voltage sensor and/or current sensor.

In the afore-mentioned embodiments, signals generated by the temperature sensors, the pressure sensors, the voltage sensors and/or the current sensors may be transmitted to a control means being configured to evaluate the signals and to detect, based on these signals, whether a thermal runaway is occurring in the battery module.

In one embodiment of the battery module according to the disclosure, the control means is further configured for controlling the at least one pump such that, upon or after detection of a thermal run-away in at least one of the battery cells, the flow of coolant guided through the plastic cooling plates is stopped for a predetermined time interval or a flow rate of the coolant guided through the plastic cooling plates is decreased for a predetermined time interval.

In one embodiment of the battery module according to the disclosure, the control means is further configured for controlling the at least one pump such that, upon or after detection of a thermal run-away in at least one of the battery cells, for each of the battery cells affected by the thermal run-away, for at least one plastic cooling plate being in thermal contact with the battery cell, the flow of coolant guided through the plastic cooling plate is stopped for a predetermined time interval or a flow rate of the coolant guided through the plastic cooling plate is decreased for a predetermined time interval.

The effect of stopping, for a predetermined time interval, the flow of coolant guided through one or more plastic cooling plates being in thermal contact with a battery cell affected by a thermal run-away is that cooling effect provided by these plastic cooling plates on the battery cell is stopped or interrupted for the time interval. As a consequence, the cooling plates being in thermal contact with a battery cell affected by a thermal run-away are heated more strongly due to the heat generated by the thermal run-away in the adjected affected battery cell such that the melting of the plastics material is accelerated and/or the reliability of this melting effect is enhanced.

However, the flow of coolant may not be completely stopped but only reduced. The effect of reducing, for a predetermined time interval, the flow rate of coolant guided through one or more plastic cooling plates being in thermal contact with a battery cell affected by a thermal run-away is that the cooling effect provided by these plastic cooling plates on the battery cell becomes also reduced for the time interval. As a consequence, the cooling plates being in thermal contact with a battery cell affected by a thermal run-away are heated more strongly due to the heat generated by the thermal run-away in the adjected affected battery cell such that the melting of the plastics material is accelerated and/or the reliability of this melting effect is enhanced.

The wording "upon or after detection" may be understood in the present context as "immediately at the time of detection or a certain/predefined time interval after detection."

In one embodiment of the battery module according to the disclosure, each of the battery cells has a prismatic shape; and the battery cells are arranged in at least one battery cell stack.

In one embodiment of the battery module according to the disclosure, if the number of battery cell stacks is larger than one, the battery cell stacks are arranged in parallel to each other along a first direction; each of the plastic cooling plates extends perpendicular to the first direction; and each of the battery cell stacks is crossed or intersected by at least one of the plastic cooling plates.

As, according to the afore-described embodiment, each of the plastic cooling plates extends perpendicular to the first direction, it follows that in such an embodiment, the plastic cooling plates are all arranged in parallel to each other.

In one embodiment of the battery module according to the disclosure, each of the battery cells includes main sides, wherein at least one of the main sides abuts, with at least one of the plastic cooling plates.

In comparison to the bottom cooling used by the conventional design of a battery module as described above in the introductory part of the disclosure, the afore-described embodiment provides a cooling area being increased by a factor of up to 10. This is particularly advantageous, when using a plastics material for the cooling plates instead of using aluminum, as is done in conventional designs.

Further, no expensive cell spacers are needed to be inserted in between the battery cells.

Due to the geometry of the stack, it follows, that in such an embodiment, between any two neighbored plastic cooling plates, when viewing along one of the battery cell stacks, either a single battery cell of this battery cell stack is sandwiched between these two neighbored plastic cooling plates (in this case, either of the main sides of this battery cell can be cooled by the plastic cooling plates) or a pair of adjacent battery cells of this battery cell stack is sandwiched between these two neighbored plastic cooling plates (in this case, for each of these battery cells, only one of the main sides can be cooled by the plastic cooling plates).

In one embodiment of the battery module according to the disclosure, each of the battery cells is sandwiched between two plastic cooling plates.

In one embodiment of the battery module according to the disclosure, each of the battery cells stacks includes an even number of N battery cells being grouped into N / 2 pairs of adjacent battery cells; and each of the N / 2 pairs of adjacent battery cells is sandwiched between two plastic cooling plates.

In one embodiment of the battery module according to the disclosure, each of the plastic cooling plates crosses or intersects each of the battery cell stacks.

In one embodiment, the battery module according to the disclosure further includes an inlet channel and an outlet channel, wherein the inlet channel is fluidly connected with each of the plastic cooling plates; and wherein the outlet channel is fluidly connected with each of the plastic cooling plates.

Here, the term "fluidly connected" refers to a connection between two pipes or channels that facilitates the smooth exchange of fluid between them, ensuring uninterrupted flow and communication.

In the afore-described embodiment, the inlet channel and the outlet channel may be placed such that each of the battery cell stacks is arranged between the inlet channel and the outlet channel. Then, upon generating a flow of coolant from the inlet channel, via the plastic cooling plates, to the outlet channel would cross each of the battery cell stacks and thus provide a particularly good cooling effect on each of the battery cell stacks.

The inlet channel may be fluidly connected with a first reservoir providing "fresh" coolant, i. e., coolant having a temperature (e. g., a temperature in the range of -40° C to +55° C) suitable for cooling the battery cells. The outlet channel may be fluidly connected with a second reservoir, into which the used coolant (i.e., coolant, which has flowed through the plastic cooling plates) can be discharged. The coolant discharged into the second reservoir can be cooled by a cooling device, transferred into the first reservoir again, and then be used as "fresh" again.

To seek "fresh" coolant into the inlet channel, a pump may be arranged between the first reservoir and an inlet of the inlet channel. Alternatively or additionally, a (further) pump may be arranged between an outlet of the outlet channel and the second reservoir to discharge the used coolant out of the outlet channel.

In alternative embodiments, only a single reservoir may be used, from which coolant is sought into the inlet channel and into which coolant is discharged from the outlet channel. In those embodiments, the single reservoir may be coolant by a cooling device.

However, in yet another embodiment of the battery module, the first and second reservoir may be omitted. Since, in case of a thermal run-away of a single battery cell or a certain group of battery cells, the body of the remaining battery module (containing battery cells not being affected by a thermal run-away) normally represents a very large thermal mass, which is usually sufficient for cooling the affected battery cells, when the coolant is circulating within the cooling system of the battery module.

In one embodiment of the battery module according to the disclosure, at least one of the plastic cooling plates includes a hollow main body assembled of two half-plates made of a first material including plastics.

In embodiments, the material of the half-plates is a plastics material.

In embodiments, each of the plastic cooling plates includes a hollow main body assembled of two half-plates.

All or at least one of the half-plates may be designed as an essentially flat plane, with the plane having an indentation or depression (forming a major part of the half-plate) and a peripheral edge area surrounding the indentation or depression.

In one embodiment of the battery module according to the disclosure, for at least one main body, the two half-plates each includes a peripheral edge area and are sealed together by their peripheral edge areas.

In embodiments, for all main bodies, the two half-plates each include a peripheral edge area and are sealed together by their peripheral edge areas.

In embodiments, for at least main body, the two half-plates may be sealed together by hot-plate welding. In one or more embodiments, for each of the main bodies, the two half-plates may be sealed together by hot-plate welding.

In one embodiment of the battery module according to the disclosure, for at least one of the main bodies, at least one of the two half-plates include a structure adapted for guiding the coolant and transferring compressive forces between the two half-plates.

These compressing forces, also referred to as swelling forces, may occur when the battery cells swell during use.

By transferring compressive forces between the two half-plates, the transferring forces are transferred between two sides of the plastic cooling plate including the main body.

In one embodiment of the battery module according to the disclosure, at least one of the main bodies includes an inlay being overmolded by the first material of the half-plates; and the inlay includes a second material different from the first material.

Here, the second material may be a plastics material or may include a plastics material.

In one embodiment of the battery module according to the disclosure, the second material includes a higher thermal conductivity than first material; and/or the second material has a higher heat resistance than the first material.

In embodiments, wherein the second material has a higher heat resistance than the first material, the second material may include mica or glass fibers.

One of the main advantages of the design according to the first or second aspect of the disclosure or any one of its above-described embodiments is the cooling effect in the case of a thermal run-away occurring in one or more of the battery cells. In case of a thermal run-away in one or more of the battery cells, the control means (which may be integrated in the BMS) will switch on the cooling system. This will start to cool the battery cells affected by the thermal run-away and also cool and protect the neighbored battery cells.

In case of a local melting of a plastic cooler plate in regions, where the plastic cooler plate adjoins the battery cell undergoing a thermal run-away, coolant (such as cooling water) will be directly spilled over adjacent very hot surfaces of the battery cells, which leads to a very focused and effective cooling.

A third aspect of the present disclosure relates to a battery system including one or more battery modules according to the first or second aspect or any one of its afore-described embodiments.

A fourth aspect of the present disclosure relates to a vehicle including at least one battery module according to the first or second aspect and/or at least one battery system according to the second aspect.

The vehicle being a hybrid vehicle or a fully electric vehicle.

A fifth aspect of the present disclosure relates to a method for controlling a battery module according to the first aspect of any one of its embodiments. The method includes the following steps:
a) detecting, by the control means, whether at least one of the plurality of battery cells is affected by a thermal run-away;
b) upon or after detection of a thermal run-away in step a), controlling the pump such that, for a battery cell affected by the thermal run-away, the coolant is guided through the plastic cooling plates being in thermal contact with the battery cell or, for the plastic cooling plate being in thermal contact with the battery cell, a flow rate of the coolant guided through the plastic cooling plate is increased in comparison to the flow rate before the detection of the thermal run-away in step a).

In one embodiment of the method according to the fifth aspect, upon detection of a thermal run-away according to step a) and before performing step b), the following step is performed:

a') controlling the at least one pump such that the flow of coolant guided through the plastic cooling plate is stopped for a predetermined time interval or a flow rate of the coolant guided through the plastic cooling plate is decreased for a predetermined time interval. A sixth aspect of the disclosure is related to a method for controlling a battery module according to the first aspect of any one of its embodiments, wherein the method includes the following steps:
a) detecting, by a control means, whether at least one of the battery cells is affected by a thermal run-away;
b) upon or after detection of a thermal run-away in step a), controlling at least one pump such that, for each of the battery cells affected by the thermal run-away, coolant is guided at least through one of the plastic cooling plates being in thermal contact with the battery cell or, for at least one plastic cooling plate being in thermal contact with the battery cell, a flow rate of the coolant guided through the plastic cooling plate is increased in comparison to the flow rate before the detection of the thermal run-away in step a).

In one embodiment of the method according to the sixth aspect, upon detection of a thermal run-away according to step a) and before performing step b), the following step is performed:
a') controlling the at least one pump such that the flow of coolant guided through the plastic cooling plates is stopped for a predetermined time interval or a flow rate of the coolant guided through the plastic cooling plates is decreased for a predetermined time interval.

In one embodiment of the method according to the sixth aspect, upon detection of a thermal run-away according to step a) and before performing step b), the following step is performed:
a') controlling the at least one pump such that, for each of the battery cells affected by the thermal run-away, for at least one plastic cooling plate being in thermal contact with the battery cell, the flow of coolant guided through the plastic cooling plate is stopped for a predetermined time interval or a flow rate of the coolant guided through the plastic cooling plate is decreased for a predetermined time interval.

The effect of stopping or reducing, for a predetermined time interval, the flow of coolant guided through one or more plastic cooling plates being in thermal contact with a battery cell affected by a thermal run-away has been already described above in the context of the first aspect of the disclosure. This applies correspondingly to the afore-described embodiment of the method for controlling a battery module according to the fourth aspect of the disclosure.

### Specific Embodiments

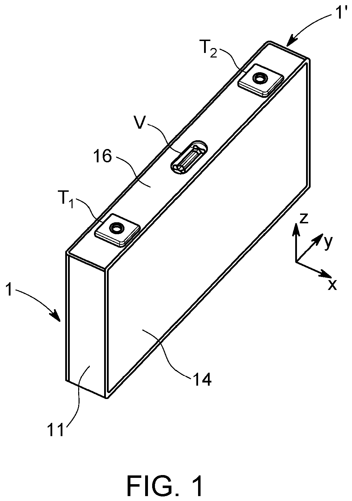

A battery module or battery system commonly includes one or more stacks of battery cells. Usually, the individual battery cells of one of those stacks are shaped identically or essentially identically to each other. As an example, the design of a typical state-of-the-art battery cell 1 used in a battery cell stack is schematically illustrated in Figure 1 with reference to a Cartesian coordinate system in a perspective view. The illustrated battery cell 1 has a parallelepiped (prismatic) shape essentially defined by a case 1'. The case 1' is, for example, a hardcase, which may be made, e. g., of a metal material. The case 1' may be built by a can or barrel including six essentially planar outer side faces. The case 1' includes a pair of congruent main sides (of that pair, only the side 14 facing into the x-direction is shown in Fig. 1) arranged opposite to each other, each of the main sides being perpendicular to the x-axis. Also, the case 1' includes a lower side (not visible in Fig. 1) and an upper side 16, the lower side and the upper side 16 being congruent and arranged opposite to each other, each of the lower side and the upper side 16 being perpendicular to the z-axis. Finally, the case 1' includes a pair of congruent lateral sides (of this pair, only the side 11 facing against the y-direction is shown) arranged opposite to each other, each of the third lateral sides being perpendicular to the y-axis. As can be seen in Fig. 1, the main sides of the battery cell 1 form the battery cell's sides having the largest (maximal) surface.

On the upper side 16 of the battery cell 1, a first terminal T₁ and a second terminal T₂ are arranged. Accordingly, the upper side 16 will be referred to in the following as the "terminal side" of battery cell 1. The terminals and T₁, T₂ allow for an electrical connection of the battery cell 1. The first terminal T₁ may be the positive terminal of the battery cell 1, and the second terminal T₂ may be the negative terminal of the battery cell 1. Furthermore, between the first terminal T₁ and the second terminal T₂, a venting outlet V is arranged on the upper side 16. Through the venting outlet V, venting gas can be ejected from the battery cell 1 in case of a thermal event occurring in the battery cell 1 such as a thermal run-away. Inside the battery cell 1, a valve (not shown) is usually installed upstream of the venting outlet V, the valve being configured to open, if the gas pressure inside the battery cell exceeds a predefined value, and to remain in a closed stated otherwise, i. e., when the gas pressure inside the battery cell is below the predefined value. Thus, before being output via the venting outlet V, the venting gas may pass the venting valve arranged inside the battery cell 1.

By stacking together a plurality of battery cells each being designed like the battery cell 1 shown in Fig. 1 along a first direction, a stack of battery cells (in the following also referred to as "battery cell stack" or simply as "stack") is created. For example, the first direction (in the following also be referred to as the "stack direction") may correspond to a direction parallel to the x-axis of the coordinate system in Fig. 1. Then, any one of the individual battery cells 1 may be oriented such in the stack that its main sides each extend perpendicular to the axis x of the coordinate system. Typically, a plurality of battery cell stacks is used in a battery module. In a battery cell stack, neighbored battery cells may either directly abut against each other or be spaced apart by cell spacers. Cell spacers can be used to adjust the correct length of a stack. Furthermore, cell spacers (also referred to as "gap fillers") can be configured to inhibit or at least reduce thermal propagation along the stack, for example in view of the heat generated during a thermal run-away. One or more battery cell spacers may be combined in a battery cell stack.

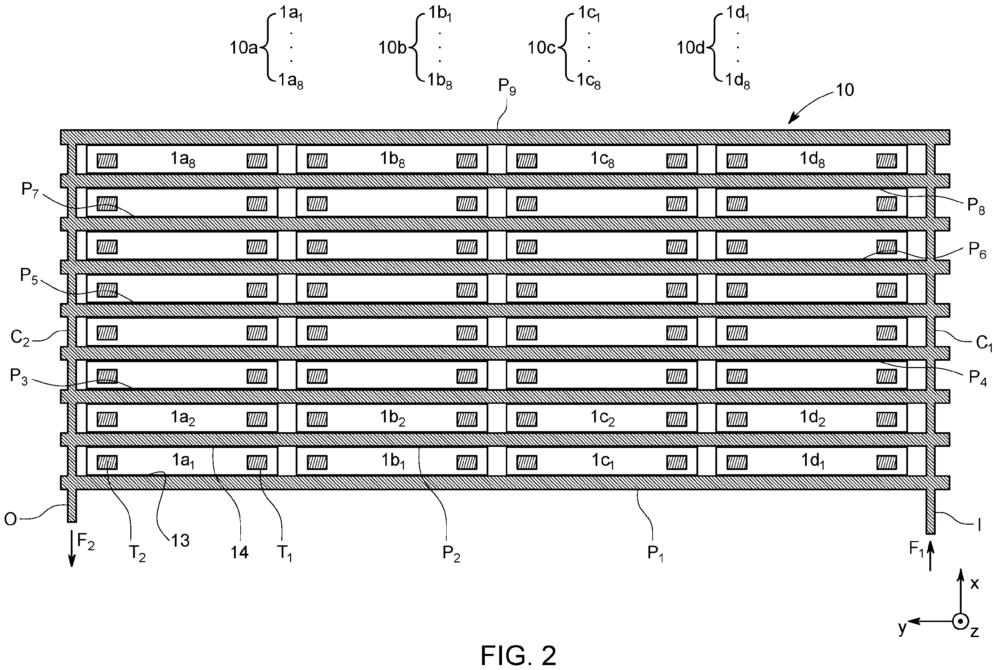

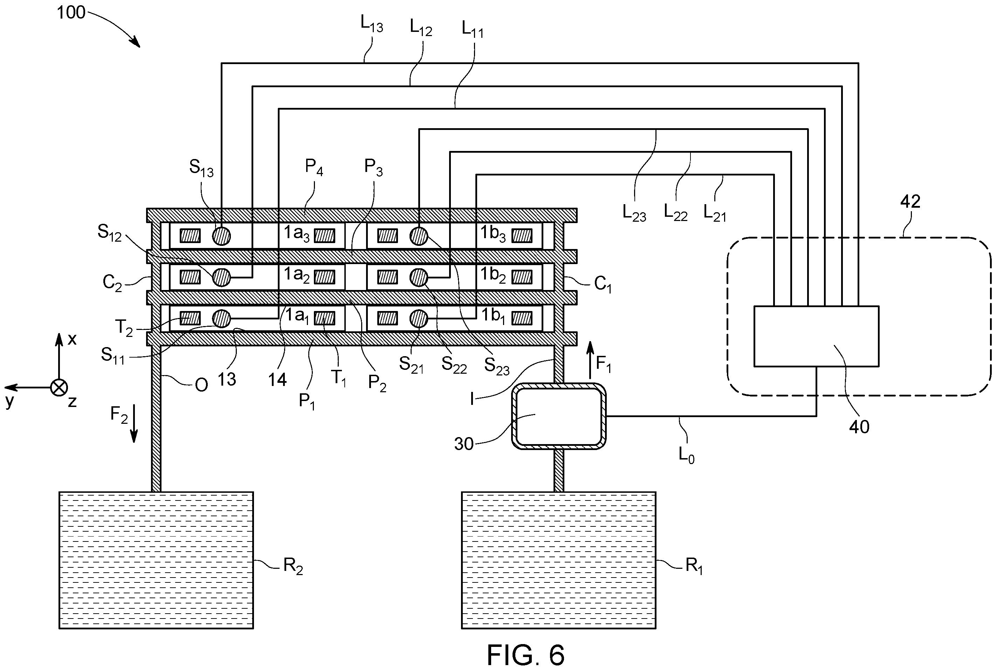

Figure 2 schematically illustrates a top view of a first embodiment of a battery module 10 according to the first aspect of the disclosure. The battery module 10 includes four battery cell stacks 10a, 10b, 10c, 10d. Each of the stacks includes eight battery cells. For example, the first battery cell stack 10a includes the battery cells 10a₁ ..., 10a₈ aligned along the x-direction. The second stack 10b, the third stack 10c, and the fourth stack 10d exhibit a similar arrangement of battery cells. Only the first, second, and the last battery cell stack per stack are labelled in Fig. 2 to keep the drawing clear. Each of the battery cells 1a₁, 1a₂, ..., 1a₈, 1b₁, 1b₂, ..., 1b₈, 1c₁, 1c₂, ..., 1c₈, 1d₁, 1d₂, ..., 1d₈ may have a design similar to that of the battery cell 1 in Fig. 1 and includes a first terminal T₁ and a second terminal T₂. The venting outlets V, though, are not shown in Fig. 2 for the sake of simplicity. Also, a control means, temperature sensors, and a pump, which may be included in the battery module 10 are omitted in the drawing to keep the figure simple. The functioning of the control means, the temperature sensors, and the pump will be described later with reference to Fig. 6.

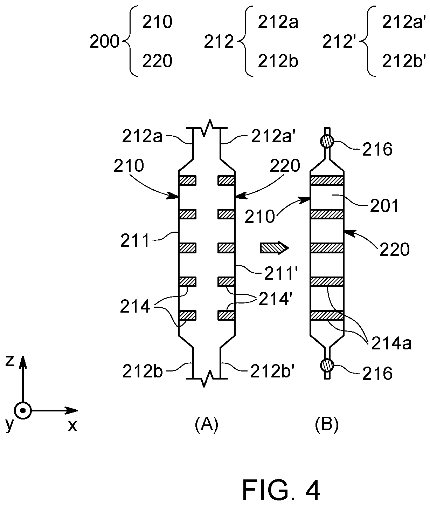

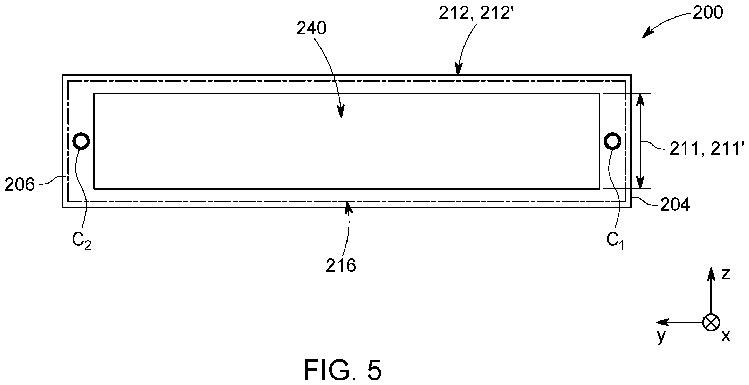

The battery module 10 according to the embodiment shown in Fig. 2 further includes a cooling system including a plurality of cooling plates P₁, P₂, P₃, P₄, P₅, P₆, P₇, P₈, P₉, as well as an inlet channel C₁ and an outlet channel C₂. Each of the cooling plates P₁, ..., P₉ includes a hollow body extending parallel to the y-z-plane of the coordinate system perpendicular to x-axis, i. e., perpendicular to the stack direction of each of the stacks 10a, 10b, 10c, 10d. Further, the bodies of each of the cooling plates P₁, ..., P₉ are made of a plastics material with a melting point in or below the temperature range of heat typically generated by a thermal run-away (typically a temperature range of approximately 400° C to 1400° C). For example, the melting point may be in the temperature range of 150 °C to 300 °C. For example, the melting point may be at a temperature of 200° C. For that reason, the cooling plates P₁, ..., P₉ will be referred to in the following as "plastic cooling plates." The design of the plastic cooling plates P₁, ..., P₉ will be explained in more detail below with reference to Figs. 4 and 5.

Both, the inlet channel C₁ and the outlet channel C₂ are formed as pipes being in fluid communication with each of the plastic cooling plates P₁, ..., P₉. The inlet channel C₁ includes an inlet I that can be connected with a first reservoir (not shown) providing "fresh" coolant, i.e., coolant having a temperature suitable for cooling the battery cells. For example, the "fresh" coolant may have a temperature in the range of -40 °C to +55 °C. Further, the outlet channel C₂ includes an outlet O that can be connected with a second reservoir, into which the used coolant (i. e., coolant, which has flowed through the plastic cooling plates) can be discharged. The coolant discharged into the second reservoir can be cooled, transferred to the first reservoir, and then be used as "fresh" again. To seek "fresh" coolant into the inlet channel (indicated by the arrow F₁), a pump (not shown) may be arranged between the first reservoir and the inlet I. Alternatively or additionally, a pump may be arranged between the outlet O and the second reservoir to discharge the used coolant out of the outlet channel (indicated by the arrow F₂).

As each of the plastic cooling plates P₁, ..., P₉ fluidly communicates with the inlet channel C₁ as well as with the outlet channel C₂, coolant can then be guided through each of the plastic cooling plates P₁, ..., P₉.

In the embodiment of the battery module as illustrated in Fig. 2, the arrangement of the battery cells 1a₁, ..., 1a₈, 1b₁, ..., 1b₈, 1c₁, ..., 1c₈, 1d₁, ..., 1d₈ with respect to the plastic cooling plates P₁, ..., P₉ can be described as follows. A first plastic cooling plate P₁ is arranged, when viewing into the x-direction, in front of the first battery cells 1a₁, 1b₁, 1c₁, 1d₁ of each of the battery cell stacks 10a, 10b, 10c, 10d. The first plastic cooling plate P₁ extends parallel to the y-z-plane of the coordinate system (i. e., orthogonal to the drawing plane of Fig. 2) and thereby abuts against the main sides facing against the x-direction of any one of the first battery cells 1a₁, 1b₁, 1c₁, 1d₁ such that these main sides are each completely covered or that at least a major part of each of these main sides is covered by the first plastic cooling plate P₁.

Similarly, a last plastic cooling plate P₉ is arranged, when viewing into the x-direction, behind the last battery cells 1a₈, 1b₈, 1c₈, 1d₈ of each of the battery cell stacks 10a, 10b, 10c, 10d. The last plastic cooling plate P₉ extends parallel to the y-z-plane of the coordinate system and thereby abuts against the main sides facing into the x-direction of any one of the last battery cells 1a₈, 1b₈, 1c₈, 1d₈ such that these main sides are each completely covered or that at least a major part of each of these main sides is covered by the last plastic cooling plate P₉.

As, with respect to the x-direction, each of the battery cell stacks 10a, 10b, 10c, 10d is confined by the first plastic cooling plate P₁ and the last plastic cooling plate P₉, these two plastic cooling plates P₁, P₉ will be referred to in the following as the "outer plastic cooling plates" in the context of the first embodiment. In contrast thereto, each of the remaining plastic cooling plates P₂, P₃, P₄, P₅, P₆, P₇ will be referred to as the "inner plastic cooling plates" in the context of the first embodiment.

Any one of the inner plastic cooling plates P₂, P₃, P₄, P₅, P₆, P₇ crosses or intersects each of the four battery cell stacks 10a, 10b, 10c, 10d. For each of the stacks 10a, 10b, 10c, 10d, the second plastic cooling plate P₂ is arranged, when viewing into the x-direction, between the first battery cell and the second battery cell of the respective stack. For example, with respect to the first battery cell stack 10a, the second plastic cooling plate P₂ is arranged, when viewing into the x-direction, between the first battery cell 10a, and the second battery cell 10a₂ of the first battery cell stack 10a. For the remaining stacks 10b, 10c, 10d, this applies in a corresponding manner. Further, the second plastic cooling plate P₂ extends parallel to the y-z-plane of the coordinate system and abuts against the main sides facing into the x-direction of any one of the first battery cells 1a₁, 1b₁, 1c₁, 1d₁ of the stacks 10a, 10b, 10c, 10d and also against the main sides facing against the x-direction of any one of the second battery cells 1a₂, 1b₂, 1c₂, 1d₂ of the stacks 10a, 10b, 10c, 10d such that these main sides are each completely covered or that at least a major part of each of these main sides is covered by the second plastic cooling plate P₂. The remaining inner plastic cooling plates P₃, P₄, P₅, P₆, P₇ are arranged in a corresponding manner.

In the afore-described embodiment, each of the individual battery cells 1a₁, ..., 1a₈, 1b₁, ..., 1b₈, 1c₁, ..., 1c₈, 1d₁, ..., 1d₈ is sandwiched between two neighbored plastic cooling plates, as can be seen in Fig. 2. Since, as described above, the plastic cooling plates P₁, P₂, P₃, P₄, P₅, P₆, P₇, P₈, P₉ each abut against the main sides of the individual battery cells, i. e., to the sides having the largest surface. Hence, upon guiding coolant through the plastic cooling plates P₁, ..., P₉, this provides an optimal heat exchange between the coolant and each of the battery cells. In the embodiment, the plastic cooling plates P₁, ..., P₉ may be in direct contact with the battery cell's main sides (i.e., no additional layers or coatings are arranged between the plastic cooling plates and the battery cells, except, in embodiments, for adhesive layers), which further improves the heat exchange. However, to improve the mechanical stability of the battery module 10, the plastic cooling plates P₁, ..., P₉ may be glued to the respective adjacent main sides of the battery cells. In other embodiments, gap fillers may be inserted between the main sides of the battery cells and the adjacent plastic cooling plates. In such embodiments, the gap fillers may also be used for gluing the main sides of the battery cells to the adjacent plastic cooling plates.

The material of the plastic cooler plates P₁, ..., P₉ is optimized to have sufficient thermal conductivity. With a plastics material having excellent characteristics as to the thermal conductivity and the highly increased surface from the cooler to the main sides of the battery cells, the power dissipation from the cells is overcome.

Gap fillers with approximately 0.6 W m⁻¹ K⁻¹ are known from the prior art. With a plastic thickness of 1.5 mm used for the plastic cooling plates, the same conductivity for example in the areas of the plastic cooling plates that are in thermal contact with the battery cells is required. Thus, a design goal is to minimize the plastic thickness, which will allow to use less thermal conductive plastic materials.

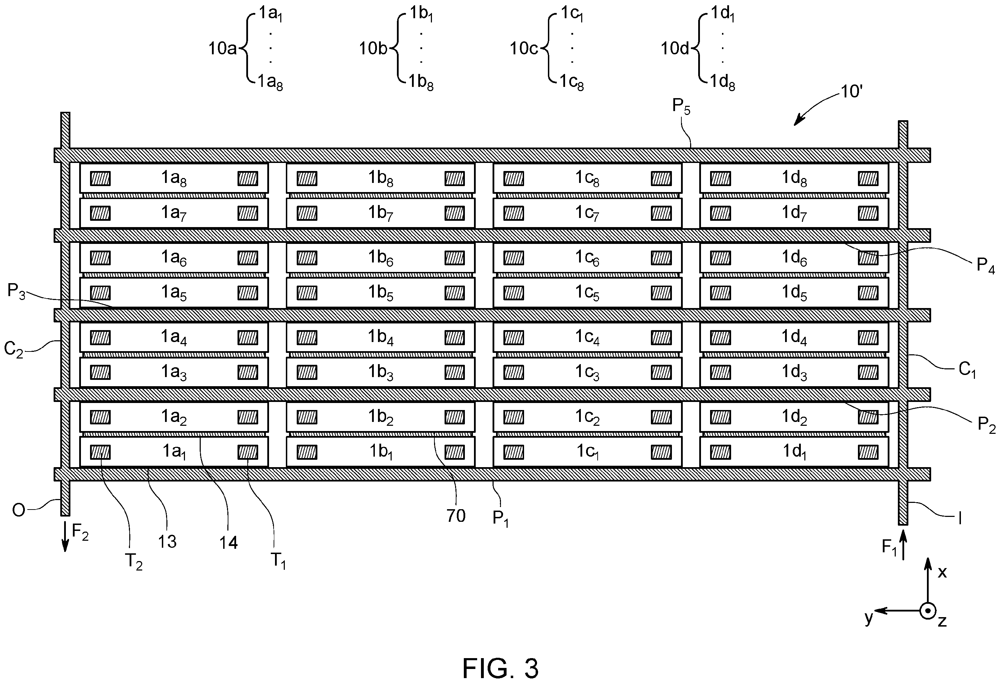

Figure 3 schematically illustrates a top view of a second embodiment of a battery module 10' according to the first aspect of the disclosure. Except for the space required for the plastic cooling plates, the arrangement of the battery cells 1a₁, 1a₂, ..., 1a₈, 1b₁, 1b₂, ..., 1b₈, 1c₁, 1c₂, ..., 1c₈, 1d₁, 1d₂, ..., 1d₈ in the second embodiment is similar to that of the first embodiment as described above. The battery module 10' includes four battery cell stacks 10a, 10b, 10c, 10d. Each of these stacks includes eight battery cells aligned along the x-direction. Each of the battery cells 1a₁, ..., 1d₈ may have a design similar to that of the battery cell 1 in Fig. 1, wherein, as in Fig. 2, the venting outlets V are not shown in Fig. 3 to keep the drawing simple. Also, a control means, temperature sensors, and a pump, which may be included in the battery module 10' are omitted in the drawing for the sake of simplicity. The functioning of the control means, the temperature sensors, and the pump will be described later with reference to Fig. 6.

The battery module 10' according to the second embodiment as shown in Fig. 2 further includes a cooling system including a plurality of plastic cooling plates P₁, P₂, P₃, P₄, P₅, as well as an inlet channel C₁ and an outlet channel C₂. The appearance of the plastic cooling plates P₁, ..., P₅ and the channels C₁, C₂ correspond to that described above as to the first embodiment and with reference to Fig. 2. Also, elements for guiding a coolant through the plastic cooling plates P₁, ..., P₅ and the channels C₁, C₂ may correspond to these described with regard to the first embodiment, including the one or more pumps and the reservoirs. Further details as to the design of the plastic cooling plates P₁, ..., P₅ will be explained in more detail below with reference to Figs. 4 and 5.

However, in contrast to the first embodiment illustrated in Fig. 2, the embodiment of the battery module 10' as shown in Fig. 3 includes only five plastic cooling plates P₁, ..., P₅. A first plastic cooling plate P₁ is arranged, when viewing into the x-direction, in front of the first battery cells 1a₁, 1b₁, 1c₁, 1d₁ of each of the battery cell stacks 10a, 10b, 10c, 10d. The first plastic cooling plate P₁ extends parallel to the y-z-plane of the coordinate system (i. e., orthogonal to the drawing plane of Fig. 3) and thereby abuts against the main sides facing against the x-direction of any one of the first battery cells 1a₁, 1b₁, 1c₁, 1d₁ such that these main sides are each completely covered or that at least a major part of each of these main sides is covered by the first plastic cooling plate P₁.

Similarly, a last plastic cooling plate P₅ is arranged, when viewing into the x-direction, behind the last battery cells 1a₈, 1b₈, 1c₈, 1d₈ of each of the battery cell stacks 10a, 10b, 10c, 10d. The last plastic cooling plate P₅ extends parallel to the y-z-plane of the coordinate system and thereby abuts against the main sides facing into the x-direction of any one of the last battery cells 1a₈, 1b₈, 1c₈, 1d₈ such that these main sides are each completely covered or that at least a major part of each of these main sides is covered by the last plastic cooling plate P₅.

As, with respect to the x-direction, each of the battery cell stacks 10a, 10b, 10c, 10d is confined by the first plastic cooling plate P₁ and the last plastic cooling plate P₅, these two plastic cooling plates P₁, P₅ will be referred to in the following as the "outer plastic cooling plates" in the context of the second embodiment. In contrast thereto, each of the remaining plastic cooling plates P₂, P₃, P₄ will be referred to as the "inner plastic cooling plates" in the context of the second embodiment.

In each of the battery cell stacks 10a, 10b, 10c, 10d, the respective eight individual battery cells are grouped into pairs of adjacent battery cells. For example, the battery cells 1a₁, 1a₂, ..., 1a₈ of the first stack 10a are grouped into a first pair including the first and second battery cells 1a₁, 1a₂, a second pair including the third and fourth battery cells 1a₃, 1a₄, a third pair including the fifth and sixth battery cells 1a₅, 1a₆, and a fourth pair including the seventh and eighth battery cells 1a₇, 1a₈. The battery cells of the remaining stacks 10b, 10c, 10d are grouped in a corresponding manner, as can also be taken from Fig. 3.

In of the afore-described pair of battery cells, the two battery cells are separated by a cell spacer 70 for electrical isolation. The cell spacer may be designed thin. Additionally, the cell spacer may be designed in a way to compensate for tolerances and accumulated swelling forces, respectively.

Now, in the second embodiment as shown in Fig. 3, the inner plastic cooling plates are arranged such that, in each of the stacks 10a, 10b, 10c, 10d, each of the above-described pairs of battery cells is sandwiched between two plastic cooling plates. For example, each of the first pairs of the battery cells stacks 10a, 10b, 10c, 10d is sandwiched between the first plastic cooling plate P₁ and the second plastic cooling plate P₂. Likewise, each of the second pairs of the battery cells stacks 10a, 10b, 10c, 10d is sandwiched between the second plastic cooling plate P₂ and the third plastic cooling plate P₃. Also, each of the third pairs of the battery cells stacks 10a, 10b, 10c, 10d is sandwiched between the third plastic cooling plate P₃ and the fourth plastic cooling plate P₄. Eventually, each of the fourth pairs of the battery cells stacks 10a, 10b, 10c, 10d is sandwiched between the fourth plastic cooling plate P₄ and the fifth (last) plastic cooling plate P₅.

Thus, in contrast to the first embodiment, wherein for each battery cell, both of its main sides are in thermal contact with a plastic cooling plate, the second embodiment realizes a concept, wherein for each battery cell, solely one of its main sides is in thermal contact with a plastic cooling plate. This allows, within the same packaging space as provided by first embodiment of Fig. 2, the use of plastic cooling plates with an increased thickness (e. g., a doubled thickness) in comparison to the first embodiment. To achieve a similar packaging ratio as with state-of-the-art designs using cell spacers with a thickness in a range of 3 to 4 mm, the concept of the second embodiment as illustrated in Fig. 3 may be advantageous, because of the needed wall thickness of the plastic cooling plates.

The first embodiment illustrates a first concept, wherein both main sides of each battery cell is in thermal contact with a plastic cooling plate. On the other hand, the second embodiment sketches a second concept, wherein for each battery cell, only one main side is in thermal contact with a plastic cooling plate, but which allows for the employment of plastic cooling plates with thicker walls in comparison to the first embodiment.

While in the foregoing, each of the concepts have been described by means of embodiments using eight battery cells per stack, these concepts can be generalized to the employment of N battery cells per stack, wherein N is an arbitrary natural number in case of the first concept and an even natural number in case of the second concept. Of course, the number of used battery cell stacks can also be varied. Here, the term "natural numbers" shall refer to the set of positive integer numbers.

For example, when using the first concept with N battery cells, two outer plastic cooling plates have to be used, viz. a first plastic cooling plate, which is placed before each of the respective first battery cells of each battery cell stacks, when viewing along a stack direction, and a last plastic cooling plate, which is placed behind each of the respective last battery cells of each battery cell stacks, when viewing along the stack direction. Further, to provide a plastic cooling plate between any two adjacent battery cells in each stack, (N - 1) inner plastic cooling plates have to be used. Hence, according to the first concept, a total number of (N + 1) plastic cooling plates is required.

Alternatively, when using the second concept with N battery cells (N being an even natural number), two outer plastic cooling plates have to be used, viz. a first plastic cooling plate, which is placed before each of the respective first battery cells of each battery cell stacks, when viewing along a stack direction, and a last plastic cooling plate, which is placed behind each of the respective last battery cells of each battery cell stacks, when viewing along the stack direction. Further, to provide a plastic cooling plate between any two adjacent pairs of battery cells in each stack, (N / 2 - 1) inner plastic cooling plates have to be used. Hence, according to the second concept, a total number of (N / 2 + 1) plastic cooling plates is required.

With reference to Figs. 4 and 5, exemplary designs of a plastic cooling plates shall now be described, which can be used with the first embodiment or the second embodiment or their generalizations to N battery cells per stack as described above. Accordingly, a plastic cooling plate 200 as schematically illustrated in Figs. 4 and 5 can be employed as any one of the plastic cooling plates P₁, P₂, P₃, P₄, P₅, P₆, P₇, P₈, P₉ of the first embodiment of the battery module 10 as described with reference to Fig. 2 or as any one of the plastic cooling plates P₁, P₂, P₃, P₄, P₅ of the second embodiment of the battery module 10' as described with reference to Fig. 3.

As schematically illustrated in Fig. 4, a plastic cooling plate 200 may include a first half-plate 210 and a second half-plate 220. (A) of Fig. 4 shows a cut through the plastic cooler plate 200 in a non-assembled state, while (B) of Fig. 4 shows a cut through the same plastic cooler plate 200 in an assembled state. In the shown example, the first half-plate 210 and the second half-plate 220 are shaped symmetrically, i. e., the shape of the second half-plate 220 may be obtained by mirroring the shape of the first half-plate 210 at a plane parallel to the y-z-plane of the coordinate system. In embodiments, the first half-plate 210 and the second half-plate 220 may be shaped identically such that, with reference to (A) of Fig. 4, the shape of the second half-plate 220 may be obtained by rotating the shape of the first half-plate 210 around an axis parallel to the y-axis of the coordinate system (perpendicular to the drawing plane of Fig. 4) by an angle of 180°.

Due to the symmetries described above, it suffices to describe the details of the half-plates with respect to the first half-plate 210 in the following. The first half-plate 210 includes an essentially flat plane having an indentation or depression 211 and a peripheral edge area 212 surrounding the indentation or depression 211. With regard to the coordinate system of Fig. 4, the indentation or depression 211 is a convexity of the first half-plate 210 into the direction against the x-axis. As (A) of Fig. 4 is a cut through the plastic cooler plate 200, an upper portion 212a and a lower portion 212b of the peripheral edge area 212 appear separated from each other in the drawing. However, the upper portion 212a and the lower portion 212b merge into another in parts of the first half-plate 210 located below and above the drawing plane of Fig. 4 so as to form a continuous circumferential peripheral edge area 212 of the first half-plate 210. The corresponding features of the second half-plate 220 are labelled by analogue reference signs in (A) of Fig. 4, but indicated by an additional prime.

Further, the first half-plate 210 includes a structure including a plurality of noses 214, each of the noses 214 protruding from the indentation or depression 211 into the x-direction. When the first half-plate 210 is assembled with the second half-plate 220 so as to form the plastic cooling plate as depicted in (B) of Fig. 4, the noses 214 of the first half-plate 210 abut each against respective noses 214' of the second half-plate 220 to form bridges 214a. These bridges 214a may form a structure adapted for guiding coolant flowing within the interior 201 of the plastic cooling plate 200. Additionally or alternatively, the bridges 214a may form a structure adapted for transferring compressive forces between the two half-plates. The compressive forces may be swelling forces caused by expanding battery cell cases 1' during use of the battery cells arranged adjacent to the plastic cooling plate 200 in a battery module according to the first aspect of the disclosure. The bridges 214a may be designed to having a stiffness required for best battery cell lifetime performance and may also act as a tolerance compensation for thickness deviations of the battery cells. The noses 214, 214' and/or the bridges 214a may be made of a plastics material.

In alternative embodiments, the noses may be omitted on the second half-plate 220, while the noses 214 of the first half-plate 210 are elongated so as to form the complete bridges 214a, when the first half-plate 210 and the second half-plate 220 are assembled to the plastic cooling plate 200 as shown in (B) of Fig. 4. Alternatively, some of bridges 214a may be realized as one piece by noses protruding from the first half-plate 210, while other noses are realized as one piece by noses protruding from the second half-plate 220. In the afore-described embodiments, of course, the first half-plate 210 and the second half-plate 220 may no longer be symmetric with respect to the noses.

The bridges 214a may be formed as columns extending, with respect to the x-direction, between the indentation or depression 211 of the first half-plate 210 to the indentation or depression 211' of the second half-plate 220. Alternatively, the bridges 214a may be formed as fins extending, with respect to the x-direction, between the indentation or depression 211 of the first half-plate 210 to the indentation or depression 211' of the second half-plate 220 and each forming a flat structure extending parallel or essentially parallel to the x-y-plane of the coordinate system.

When the first half-plate 210 and the second half-plate 220 as illustrated in (A) of Fig. 4 are assembled so as to form the plastic cooling plate 200 as shown in (B) Fig. 4, the first half-plate 210 and the second half-plate 220 are attached to each other by their peripheral edge areas 212, 212'. In the assembled plastic cooling plate 200, the indentation or depression 211 of the first half-plate 210 and the corresponding indentation or depression 211' of the second half-plate 220 point away from each other. Consequently, a cavity 201 is formed between the first half-plate 210 and the second half-plate 220 in the area of their indentation or depression 211, 211'.

In order to assemble the plastic cooling plate 200, the first half-plate 210 and the second half-plate 220 may be welded together, e. g., by hot-plate welding or mirror welding. In the example shown in Fig. 4, the first half-plate 210 and the second half-plate 220 are welded together at their peripheral edge areas 212, 212'. In other words, the welding is performed along a welding line 216 running along the peripheral edge areas 212, 212' of the first and second half-plates 210, 220 and is thus completely surrounding the indentation or depression 211 of the first half-plate 210 and, likewise, the indentation or depression 211' of the second half-plate 220 (see also Fig. 5) as well as the cavity 201 formed between the first and second half-plates 210, 220 as described above. Hence, the cavity 201 forming an interior of the plastic cooling plate 200 is sealed fluid-proof by the welding line 216 connecting the first and second half-plates 210, 220.

The first half-plate 210 and the second half-plate 220 in a state welded together as shown in (B) of Fig. 4 form a main body of the plastic cooling plate 200. In the y-direction, the main body may have a width being large enough to intersect or to be placed before or behind all battery stacks of a battery module according to the first aspect of the disclosure, e. g., the battery stacks 10a, 10b, 10c, 10d of the first embodiment shown in Fig. 2 or the second embodiment shown in Fig. 3, and to cover, when implemented into a battery module, the main sides of each of the adjacent battery cells. In the z-direction, the main body may have a height corresponding (exactly or approximately) to or being larger than the height of the cases 1' of the battery cells used in the battery module 10, 10'. Consequently, at least in the usual case that a battery module includes more than one battery cell stack, the main body will exhibit an elongated shape with respect to its extension parallel to the y-z-plane, wherein its extension along the y-direction is larger than its extension along the z-direction, as indicated in Fig. 5. In embodiments, the main body as illustrated in (B) of Fig. 4 may be supplemented by further features, as will be described in the following with reference to Figure 5.

Depending on the required cooling performance of the plastic cooling plate 200, a member with higher thermal conductivity may be placed as an inlay 240 in the injection molding of the first half-plate 210 and the second half-plate 220. The inlay 240 may be made of a plastics material. This gives the opportunity to realize surfaces with a relatively high heat conductivity in the required areas (such as in the areas of the indentations or depressions 211, 211'), while at the same time employing low-cost plastics in other areas of the plastic cooling plate 200. For higher temperature stability in case of a thermal runaway of one or more of the adjacent battery cells, when the plastic cooling plate 200 is implemented into a battery module 10 as described above with reference to Figs. 2 and 3, the inlay 240 may also be adapted to this need. In addition, materials with a higher temperature stability in comparison to the plastics material of the main body (such as MICA or glass fiber mates) may be overmolded in the required areas such as in the areas of the indentations or depressions 211, 211'.

As already pointed out in the context of Figs. 2 and 3, the plastic cooling plates 200 are each configured for being fluidly connected to the inlet channel C₁ and the outlet channel C₂ of the battery module 10, 10'. The inlet channel C₁ and the outlet channel C₂ may each be led through a peripheral area of the interior 201 of the plastic cooling plate 200. Thus, the plastic cooling plate 200 may include suitable openings (not shown), through which the inlet channel C₁ and the outlet channel C₂ can be inserted into or pushed through the plastic cooling plate 200. As the plastic cooling plate is configured for guiding coolant from the inlet channel C₁ and the outlet channel C₂, the inlet channel C₁ is arranged, within the interior 201 of the plastic cooling plate 200, at a peripheral area close to a first end portion 204 of the plastic cooling plate 200 pointing against the y-direction, while the outlet channel C₂ is arranged, within the interior 201 of the plastic cooling plate 200, at a peripheral area close to an opposite second end portion 206 of the plastic cooling plate 200 pointing into the y-direction (see Fig. 5). Of course, the inlet channel C₁ and the outlet channel C₂ must each have openings (not shown) positioned such that, when being implemented into the battery module, coolant can stream from the inlet channel C₁ into each of the plastic cooling plates 200 and, vice-versa, coolant can be discharged into the outlet channel C₁ from each of the plastic cooling plates 200. Consequently, when being in use during operation of the battery module, the coolant is conducted along the entire length of the interior 201 of each of the plastic cooling plates 200 from their respective first one end portion 204 to the respective opposite second end portion 206.

A method for controlling a battery module according to the first aspect of the disclosure will be described in below with reference to Figure 6, which schematically illustrates a third embodiment of the battery module according to the first aspect. Like the first embodiment described above, the third embodiment realizes the concept, wherein each battery cell can be cooled by each of its main sides 13, 14. However, for the sake of simplicity, a battery module 100 with only six battery cells has been chosen for the illustration, the six battery cells 1a₁, 1a₂, 1a₃, 1b₁, 1b₂, 1b₃ being arranged in two battery cell stacks, viz. a first battery stack including three battery cells 1a₁, 1a₂, 1a₃ and a second stack including the battery cells 1b₁, 1b₂, 1b₃.

Further, the battery module 100 includes a cooling system including a plurality of plastic cooling plates P₁, P₂, P₃, P₄ as well as an inlet channel C₁ and an outlet channel C₂, which are fluidly connected to each other similar to arrangement of the first embodiment described with reference to Fig. 2, with the difference, however, that the last plastic cooling plate, when viewing into the x-direction, is formed by the fourth plastic cooling plate P₄, and the inner plastic cooling plates only include the second plastic cooling plate P₂ and the third plastic cooling plate P₃.

As can be seen in Fig. 6, temperature sensors S₁₁, S₁₂, S₁₃, S₂₁, S₂₂, S₂₃ are attached to the battery cells 1a₁, 1a₂, 1a₃, 1b_{1,} 1b₂, 1b₃ such that one temperature sensor is provided per battery cell. Each of the temperature sensors S₁₁, S₁₂, S₁₃, S₂₁, S₂₂, S₂₃ is configured for measuring a temperature of the respective battery cell 1a₁, 1a₂, 1a₃, 1b₁, 1b₂, 1b₃ it is attached to and for generating a temperature signal corresponding to the measured temperature. Via respective data lines L₁₁, L₁₂, L₁₃, L₂₁, L₂₂, L₂₃, the temperature sensors S₁₁, S₁₂, S₁₃, S₂₁, S₂₂, S₂₃ are each connected to a control means 40. Thus, the temperature signals generated by the temperature sensors can be transmitted, via the data lines L₁₁, L₁₂, L₁₃, L₂₁, L₂₂, L₂₃, to the control means 40, which is configured for receiving and evaluating the temperature signals. In the embodiment, the date lines L₁₁, L₁₂, L₁₃, L₂₁, L₂₂, L₂₃ may be realized by electrical connections (wires). Alternatively, the data lines L₁₁, L₁₂, L₁₃, L₂₁, L₂₂, L₂₃ may be realized as wireless data connections. Further, the control means 40 may be realized as an electric circuit, as a microprocessor, as a CPU or the like. The control means 40 may be integrated into a battery management system 42 (BMS) of the battery module 100, as described above in the introductory part of the disclosure.

The control means 40 is configured for evaluating, based on the received temperature signals generated by the temperature sensors S₁₁, S₁₂, S₁₃, S₂₁, S₂₂, S₂₃, whether a thermal run-away is occurring in at least one of the battery cells 1a₁, 1a₂, 1a₃, 1b₁, 1b₂, 1b₃. To that end, the control means 40 may be configured for evaluating temperature values based on the received temperature signals and for comparing each of these temperature values with a respective first threshold. If the first threshold is exceeded by a temperature value, the control means 40 may assume that a thermal run-away occurs in one of the battery cells. Alternatively or additionally, the control means 40 may also calculate, for each of the received temperature signals, a change of a temperature per time unit and compare each of the calculated changes of a temperature per time unit may be compared with a respective second threshold. If the first threshold is exceeded by a temperature value, the control means 40 may assume that a thermal run-away occurs in one of the battery cells. In embodiments, the control means 40 may assume that a thermal run-away occurs in one of the battery cells, if the first threshold is exceeded and at the same time also the second threshold is exceeded based on the temperature signal for at least one of the battery cells.

If the control means 40 evaluates that a thermal run-away is occurring in at least one of the battery cells 1a₁, 1a₂, 1a₃, 1b₁, 1b₂, 1b₃, the control means 40 may generate a control signal for controlling a pump 30. The control signal may be transmitted to the pump 30 via a data line L₀, which may be realized as electrical connection (wire) or as a wireless data connection. The pump 30 is fluidly connected, via an inlet I, with an inlet channel C₁. The pump 30 is further fluidly connected with a first reservoir R₁ providing "fresh" coolant, i. e., coolant having a temperature suitable for cooling the battery cells 1a₁, 1a₂, 1a₃, 1b_{1,} 1b₂, 1b₃. The reservoir first R₁ may not be included in the battery module 100 but provided as an external element. In alternative embodiments, the first reservoir R₁ may be included in the battery module 100. The pump 30 is configured to seek, when being operated, coolant from the first reservoir R₁ into the inlet I of the inlet channel C₁. Further, the outlet O of the outlet channel C₂ is connected to a second reservoir R₂ configured to receive used coolant being discharged from the cooling system via the outlet channel C₂.

During normal operation of the battery module 100, i. e., when no thermal run-away is detected, the pump 30 may be operated such that coolant is guided at a first flow rate through each of the plastic cooling plates P₁, P₂, P₃, P₄. However, in embodiments of operating the cooling system, the flow of coolant may also be interrupted from time to time. In time intervals, in which the flow of coolant is interrupted, the pump 30 may be deactivated by the control means 40.

If the pump 30 is in a deactivated state, and the control means 40 evaluates that a thermal run-away is occurring in at least one of the battery cells 1a₁, 1a₂, 1a₃, 1b_{1,} 1b₂, 1b₃, the control means 40 generates a control signal so as to activate the pump 40 such that coolant is guided through the plastic cooling plates P₁, P₂, P₃, P₄, for example, either with the first flow rate or with a second flow rate larger than the first flow rate.

If the pump 30 is in a activated state such that coolant is pumped at the first flow rate through the plastic cooling plates P₁, P₂, P₃, P₄, and the control means 40 evaluates that a thermal run-away is occurring in at least one of the battery cells 1a₁, 1a₂, 1a₃, 1b_{1,} 1b₂, 1b₃, the control means 40 generates a control signal so as to control the pump 30 such that coolant is guided through the plastic cooling plates P₁, P₂, P₃, P₄ with the second flow rate larger than the first flow rate.

When one or more of the battery cells 1a₁, 1a₂, 1a₃, 1b_{1,} 1b₂, 1b₃ are affected by a thermal run-away, an enormous heat is generated, which causes the plastics material of the plastic cooling plates P₁, P₂, P₃, P₄ to melt in regions, where the plastic cooling plates P₁, P₂, P₃, P₄ are in thermal contact with the affected battery cells, since according to the disclosure, the material of the plastic cooling plates P₁, P₂, P₃, P₄ is configured to melt through in such a case. Due to this process, openings are created in the body of the plastic cooling plates P₁, P₂, P₃, P₄, through which coolant escapes to the outside of the plastic cooling plates P₁, P₂, P₃, P₄. Accordingly, reaches, via these openings, the battery cells affected by a thermal run-away, which provides an optimal cooling effect on the affected battery cells and extinguishes or at least helps to extinguish the thermal run-away occurring in the failed battery cells.

However, the above-described melting process and the process of creating the openings in the plastic cooling plates can be retarded, if fresh coolant is replenished via the plastic cooling plates immediately after the thermal run-away is generated or has been detected by the control means 40 as described above. Hence, in embodiments, the control means 40 is configured for deactivating the pump 30 or for reducing the pumping capacity for a predetermined time interval upon detection of a thermal run-away in at least one of the battery cells 1a₁, 1a₂, 1a₃, 1b₁, 1b₂, 1b₃. Then, the flow of coolant guided through the plastic cooling plates P₁, P₂, P₃, P₄ is stopped for the predetermined time interval, or a flow rate of the coolant guided through the plastic cooling plate P₁, P₂, P₃, P₄ is decreased for a predetermined time interval. Hence, a delay of the melting process as described above is avoided, the process of creating openings in the plastic cooling plate P₁, P₂, P₃, P₄ is correspondingly accelerated, and the process of the coolant direct coming in contact with the battery cells affected by the thermal run-away is likewise accelerated. After expiry of the predetermined time interval, the control means 40 then controls the pump 30 such that coolant is guided through the plastic cooling plates P₁, P₂, P₃, P₄, for example, either with the first flow rate or with a second flow rate larger than the first flow rate, as described already above.

Although the method of operating a battery module has been described by example of the third embodiment, as depicted in Fig. 6, it is understood that the method of operating can be applied in a corresponding manner to any embodiment of the battery module according to the first aspect of the disclosure, e. g., to the first embodiment as illustrated in Fig. 2 and/or the second embodiment as shown in Fig. 3.

### Reference signs

- 1: battery cell
- 1': battery cell case
- 1a₁, ..., 1a₈: battery cells
- 1b₁, ..., 1b₈: battery cells
- 1c₁, ..., 1c₈: battery cells
- 1d₁, ..., 1d₈: battery cells
- 10, 10': battery module
- 10a, 10b, 10c, 10d: battery cell stacks
- 11: lateral side of battery cell case
- 13: main side of battery cell case
- 14: main side of battery cell case
- 16: upper side of battery cell case
- 30: pump
- 40: control means
- 42: battery management system
- 100: battery module
- 200: plastic cooling plate
- 201: cavity / interior of plastic cooling plate
- 204: first end portion of plastic cooling plate
- 206: second end portion of plastic cooling plate
- 210: first half-plate
- 220: second half-plate
- 211, 211': indentation or depression
- 212, 212a, 212b: peripheral edge area of first half-plate
- 212', 212a', 212b': peripheral edge area of second half-plate
- 214, 214': noses
- 214a: bridges
- 216: welding line
- 240: inlay
- C₁: inlet channel
- C₂: outlet channel
- F₁, F₂: arrows indicating a flow direction
- I: inlet
- L₀, L₁₁, L₁₂, L₁₃, L₂₁, L₂₂, L₂₃: data lines
- O: outlet
- P₁, P₂, P₃, P₄, P₅, P₆, P₇, P₈, P₉: plastic cooling plates
- R₁, R₂: reservoirs
- S₁₁, S₁₂, S₁₃, S₂₁, S₂₂, S₂₃: temperature sensors
- T₁, T₂: terminals of a battery cell
- V: venting outlet
- x, y, z: axes of a Cartesian coordinate system

## Claims

1. A battery module (10), comprising:
a battery cell stack (10a, 10b, 10c, 10d), the battery cell stack comprising a plurality of battery cells (1) being stacked along a first direction (x);
a plastic cooling plate (200) configured for guiding a coolant;
a pump (30); and
a control means (40);
wherein each of the plurality of battery cells (1) is in thermal contact with the plastic cooling plate (200);
wherein the plastic cooling plate (200, P₁, ..., P₉) is made of or comprises a plastics material configured for melting when the plastics material comes into thermal contact with a battery cell affected by a thermal run-away;
wherein the control means (40) is configured for detecting a situation, wherein at least one of the plurality of battery cells (1) is affected by a thermal run-away; and
wherein the control means (40) is further configured for controlling, upon or after detection of a thermal run-away in at least one of the plurality of battery cells (1), the pump (30) such that, for a battery cell (1) affected by the thermal run-away, the coolant is guided through the plastic cooling plate (200, P₁, ..., P₉) being in thermal contact with the battery cell (1) or, for the plastic cooling plate (200, P₁, ..., P₉) being in thermal contact with the battery cell (1), a flow rate of the coolant guided through the plastic cooling plate (200, P₁, ..., P₉) is increased in comparison to the flow rate before the detection of the thermal run-away.

2. The battery module (10) as claimed in claim 1, wherein the control means (40) is further configured for controlling the pump (30) such that, upon or after detection of a thermal run-away in at least one of the plurality of battery cells (1), the flow of coolant guided through the plastic cooling plate (200, P₁, ..., P₉) is stopped for a predetermined time interval or a flow rate of the coolant guided through the plastic cooling plate (200, P₁, ..., P₉) is decreased for a predetermined time interval.

3. The battery module (10) as claimed in claim 1 or 2,
wherein each of the plurality of battery cells (1) has a prismatic shape;
wherein, if the number of battery cell stacks (10a, 10b, 10c, 10d) is larger than one, the battery cell stacks (10a, 10b, 10c, 10d) are arranged in parallel to each other along a first direction (x);
wherein the plastic cooling plate (200, P₁, ..., P₉) extends perpendicular to the first direction (x); and
wherein each of the battery cell stacks (10a, 10b, 10c, 10d) is crossed or intersected by the plastic cooling plate (200, P₁, ..., P₉).

4. The battery module (10) as claimed in any one of claims 1 to 3,
wherein each of the battery cells (1) comprises main sides (13, 14); and
wherein at least one of the main sides abuts with the plastic cooling plate (200, P₁, ..., P₉).

5. The battery module (10) as claimed in any one of claims 1 to 4, wherein each of the battery cells (1) is sandwiched between two plastic cooling plates (200, P₁, ..., P₉).

6. The battery module (10) as claimed in any one of claims 1 to 4,
wherein the battery cells stack (10a, 10b, 10c, 10d) comprises an even number of N battery cells (1) being grouped into N / 2 pairs of adjacent battery cells; and
wherein each of the N / 2 pairs of adjacent battery cells is sandwiched between two plastic cooling plates (200, P₁, ..., P₅).

7. The battery module as claimed in any one of claims 1 to 6, wherein the plastic cooling plates (200, P₁, ..., P₅) comprises a hollow main body assembled of two half-plates (210, 220) made of a first material comprising plastics.

8. The battery module as claimed in claim 7,
wherein, for the hollow main body, the two half-plates (210, 220) each comprise a peripheral edge area (212, 212') and are sealed together by their peripheral edge areas.

9. The battery module as claimed in claim 7 or 8,
wherein, for the hollow main body, at least one of the two half-plates (210, 220) comprises a structure adapted for guiding the coolant and transferring compressive forces between the two half-plates.

10. The battery module as claimed in any one of claims 7 to 9,
wherein the hollow main body comprises an inlay (240) being overmolded by the first material of the two half-plates (210, 220); and
wherein the inlay (240) comprises a second material different from the first material.

11. The battery module as claimed in claim 10,
wherein the second material comprises a higher thermal conductivity than first material; and/or
wherein the second material has a higher heat resistance than the first material.

12. A battery system comprising one or more battery modules according to any one of claims 1 to 11.

13. A vehicle comprising a battery module as claimed in any one of claims 1 to 11 and/or a battery system according to claim 12.

14. Method for controlling a battery module (10) as claimed in any one of claims 1 to 11, the method comprising the following steps:
a) detecting, by the control means (40), whether at least one of the plurality of battery cells (1) is affected by a thermal run-away;
b) upon or after detection of a thermal run-away in step a), controlling the pump (30) such that, for a battery cell (1) affected by the thermal run-away, the coolant is guided through the plastic cooling plate (200) being in thermal contact with the battery cell (1) or, for the plastic cooling plate (200) being in thermal contact with the battery cell (1), a flow rate of the coolant guided through the plastic cooling plate (200) is increased in comparison to the flow rate before the detection of the thermal run-away in step a).

15. The method as claimed in claim 14, wherein upon detection of a thermal run-away according to step a) and before performing step b), the following step is performed:
a') controlling the at least one pump (30) such that the flow of coolant guided through the plastic cooling plate (200, P₁, ..., P₉) is stopped for a predetermined time interval or a flow rate of the coolant guided through the plastic cooling plate (200, P₁, ..., P₉) is decreased for a predetermined time interval.

## Amended claims

### Amended claims in accordance with Rule 137(2) EPC.

1. A battery module (10), comprising:
a battery cell stack (10a, 10b, 10c, 10d), the battery cell stack comprising a plurality of battery cells (1) being stacked along a first direction (x);
at least one plastic cooling plate (200, P₁, ..., P₉) configured for guiding a coolant;
a pump (30); and
a control means (40);
wherein each of the plurality of battery cells (1) is in thermal contact with the plastic cooling plate (200);
wherein the at least one plastic cooling plate (200, P₁, ..., P₉) is made of or comprises a plastics material configured for melting when the plastics material comes into thermal contact with a battery cell affected by a thermal run-away;
wherein the control means (40) is configured for performing a step a) of detecting a situation, wherein at least one of the plurality of battery cells (1) is affected by a thermal run-away;
wherein the control means (40) is further configured for performing a step b) of controlling, upon or after detection of a thermal run-away in at least one of the plurality of battery cells (1), the pump (30) such that, for a battery cell (1) affected by the thermal run-away, the coolant is guided at least through one of the plastic cooling plates (200, P₁, ..., P₉) being in thermal contact with the battery cell (1) or, for at least one plastic cooling plate (200, P₁, ..., P₉) being in thermal contact with the battery cell (1), a flow rate of the coolant guided through said at least one plastic cooling plate (200, P₁, ..., P₉) is increased in comparison to the flow rate before the detection of the thermal run-away; and
wherein each of the plastic cooling plates (200, P₁, ..., P₅) comprises a hollow main body assembled of two half-plates (210, 220) made of a first material comprising plastics.

2. The battery module (10) as claimed in claim 1, wherein the control means (40) is further configured for performing, before performing step b), a step a') of controlling the pump (30) such that, upon or after detection of a thermal run-away in at least one of the plurality of battery cells (1), the flow of coolant guided through the one or more plastic cooling plates (200, P₁, ..., P₉) being in thermal contact with the battery cell (1) affected by the thermal run-away is stopped for a predetermined time interval or a flow rate of the coolant guided through said plastic cooling plates (200, P₁, ..., P₉) is decreased for a predetermined time interval.

3. The battery module (10) as claimed in claim 1 or 2,
wherein each of the plurality of battery cells (1) has a prismatic shape;
wherein, if the number of battery cell stacks (10a, 10b, 10c, 10d) is larger than one, the battery cell stacks (10a, 10b, 10c, 10d) are arranged in parallel to each other along a first direction (x);
wherein the plastic cooling plate (200, P₁, ..., P₉) extends perpendicular to the first direction (x); and
wherein each of the battery cell stacks (10a, 10b, 10c, 10d) is crossed or intersected by the plastic cooling plate (200, P₁, ..., P₉).

4. The battery module (10) as claimed in any one of claims 1 to 3,
wherein each of the battery cells (1) comprises main sides (13, 14); and
wherein at least one of the main sides abuts with the plastic cooling plate (200, P₁, ..., P₉).

5. The battery module (10) as claimed in any one of claims 1 to 4, wherein each of the battery cells (1) is sandwiched between two plastic cooling plates (200, P₁, ..., P₉).

6. The battery module (10) as claimed in any one of claims 1 to 4,
wherein the battery cells stack (10a, 10b, 10c, 10d) comprises an even number of N battery cells (1) being grouped into N / 2 pairs of adjacent battery cells; and
wherein each of the N / 2 pairs of adjacent battery cells is sandwiched between two plastic cooling plates (200, P₁, ..., P₅).

7. The battery module as claimed in any one of claims 1 to 6,
wherein, for the hollow main body, the two half-plates (210, 220) each comprise a peripheral edge area (212, 212') and are sealed together by their peripheral edge areas.

8. The battery module as claimed in any one of claims 1 to 7,
wherein, for the hollow main body, at least one of the two half-plates (210, 220) comprises a structure adapted for guiding the coolant and transferring compressive forces between the two half-plates.

9. The battery module as claimed in any one of claims 1 to 8,
wherein the hollow main body comprises an inlay (240) being overmolded by the first material of the two half-plates (210, 220); and
wherein the inlay (240) comprises a second material different from the first material.

10. The battery module as claimed in claim 9,
wherein the second material comprises a higher thermal conductivity than first material; and/or
wherein the second material has a higher heat resistance than the first material.

11. A battery system comprising one or more battery modules according to any one of claims 1 to 10.

12. A vehicle comprising a battery module as claimed in any one of claims 1 to 10 and/or a battery system according to claim 11.

13. Method for controlling a battery module (10) as claimed in any one of claims 1 to 10, the method comprising the following steps:
a) detecting, by the control means (40), whether at least one of the plurality of battery cells (1) is affected by a thermal run-away;
b) upon or after detection of a thermal run-away in step a), controlling the pump (30) such that, for a battery cell (1) affected by the thermal run-away, the coolant is guided at least through one of the plastic cooling plate (200, P₁, ..., P₉) being in thermal contact with the battery cell (1) or, for at least one plastic cooling plate (200) being in thermal contact with the battery cell (1), a flow rate of the coolant guided through said at least one plastic cooling plate (200) is increased in comparison to the flow rate before the detection of the thermal run-away in step a).

14. The method as claimed in claim 13, wherein upon detection of a thermal run-away according to step a) and before performing step b), the following step is performed:
a') controlling the at least one pump (30) such that the flow of coolant guided through the one or more plastic cooling plates (200, P₁, ..., P₉) being in thermal contact with the battery cell (1) affected by the thermal run-away is stopped for a predetermined time interval or a flow rate of the coolant guided through said plastic cooling plates (200, P₁, ..., P₉) is decreased for a predetermined time interval.
